# EUROPEAN PATENT APPLICATION

(11) **EP 4 503 266 A1**
(43) Date of publication of application: **05.02.2025**
(21) Application number: 23779131.4
(22) Date of filing: 28.02.2023
(51) Int. Cl.: H01M 10/617, H01M 10/613, H01M 10/627, H01M 10/651, H01M 10/6562, H01M 10/6563, H01M 50/204, H01M 50/213

(54) **POWER SUPPLY DEVICE**

(30) Priority: 31.03.2022 JP 2022058420
(71) Applicant: Panasonic Energy Co., Ltd., Osaka 570-8511 (JP)
(72) Inventor: NAKAMURA, Takuo, Kadoma-shi, Osaka 571-0057 (JP)
(74) Representative: Novagraaf International SA
(86) International application number: PCT/JP2023/007206
(87) International publication number: WO 2023/189101

(57) **Abstract**

A power supply device includes a first battery block including secondary battery cells accommodated therein, a second battery block including secondary battery cells accommodated therein below and apart from the first battery block by a first spacing, a third battery block including secondary battery cells accommodated therein below block and apart from the second battery block by a second spacing, a fourth battery block including secondary battery cells accommodated therein below and apart from the third battery block by a third spacing, and a housing accommodating the first to fourth battery blocks therein such that the first to fourth battery blocks are arranged in upward and downward directions. The first spacing is larger than the third spacing.

## Description

### TECHNICAL FIELD

The present disclosure relates to a power supply device.

### BACKGROUND ART

Rack-type power supply devices in which a lot of secondary batteries are connected in series and parallel to one another have been used in various applications that include power storage for peak-cut or household photovoltaic power generation, a backup power supply for servers, buildings, and factories, and a power drive (PTL 1). Each of the power supply devices accommodate, in a rack, multiple battery blocks each of which is composed of a lot of chargeable-dischargeable secondary battery cells.

The power supply device including a lot of secondary battery cells has a problem that variations in battery temperature will decrease its service lifetime. For prolonging the service lifetime, it is required to minimize Δt (a difference between the maximum and minimum temperatures of batteries) throughout the product.

Two techniques are possible as major countermeasures for minimizing Δt: forced-air cooling and natural-air cooling. Examples of the forced-air cooling include a technique with which a product is equipped with a cooling fan for uniformly air-cooling its battery blocks. Unfortunately, this technique raises the cost of the product and poses problems of, e.g., noise control and maintenance of the cooling fan. This attaches greater importance to how to maximize the heat equalizing effect by natural-air cooling.

In general, in the case where the same battery blocks are stacked in the vertical direction, battery blocks in middle tiers inside its housing show the maximum temperature in comparison with the battery blocks in the uppermost and lowermost tiers that tend to undergo heat exchange because of their close proximity to the outer housing. Further, since the temperature gradient inside the housing is distributed in the upward and downward directions, regarding the housing structure discussed here equipped with four-tier battery blocks, the maximum heat generation occurs in the second block from the top.

### CITATION LIST

### Patent Literature

PTL 1: Japanese Patent Laid-Open Publication No. 2020-057449

### SUMMARY OF INVENTION

A power supply device according to an aspect of the present disclosure includes a first battery block including a plurality of secondary battery cells accommodated in the first battery block; a second battery block including a plurality of secondary battery cells accommodated in the second battery block, the second battery being disposed below the first battery block apart from the first battery block by a first spacing; a third battery block including a plurality of secondary battery cells accommodated in the third battery block, the third battery block being disposed below the second battery block and apart from the second battery block by a second spacing; a fourth battery block including a plurality of secondary battery cells accommodated in the fourth battery block, the fourth battery block being disposed below the third battery block and apart from the third battery block by a third spacing; and a housing accommodating the first battery block, the second battery block, the third battery block, and the fourth battery block therein such that the first battery block, the second battery block, the third battery block, and the fourth battery block are arranged in upward and downward directions. The first spacing is larger than the third spacing.

In accordance with the power supply device according to the aspect of the present disclosure, spacings between adjacent battery blocks are not equal to one another. The first spacing between the first battery block and the second battery block is larger. This configuration effectively cools the second battery block that tends to trap heat therein because of being sandwiched between the first battery block and the third battery block inside the housing. This reduces temperature differences between the battery blocks, resulting in a prolonged service lifetime of the battery blocks.

### BRIEF DESCRIPTION OF DRAWINGS

FIG. 1 is a perspective view of a power supply device according to an exemplary embodiment of the present disclosure.
FIG. 2 is an exploded perspective view of the power supply device shown in FIG. 1.
FIG. 3 is an exploded perspective view of a block assembly shown in FIG. 2.
FIG. 4 is a cross-sectional view of the power supply device along line IV-IV shown in FIG. 1.
FIG. 5 is a cross-sectional view of the power supply device along line V-V shown in FIG. 1.
FIG. 6 is a perspective cross-sectional view of the power supply device along line V-V shown in FIG. 1.
FIG. 7 is a cross-sectional view of the power supply device along line VII-VII shown in FIG. 1.
FIG. 8 is an image diagram showing a simulation result for a power supply device of a Comparative Example from the same viewpoint as FIG. 4.
FIG. 9 is an image diagram showing a simulation result for the power supply device of an Example from the same viewpoint as FIG. 4.
FIG. 10A is a diagram showing a simulation result for a first battery block of the power supply device of the Comparative Example from the same viewpoint as FIG. 7.
FIG. 10B is a diagram showing a simulation result for a second battery block.
FIG. 10C is a diagram showing a simulation result for a third battery block.
FIG. 10D is a diagram showing a simulation result for a fourth battery block.
FIG. 11A is a diagram showing a simulation result for a first battery block of the power supply device of the Example from the same viewpoint as FIG. 7.
FIG. 11B is a diagram showing a simulation result for a second battery block.
FIG. 11C is a diagram showing a simulation result for a third battery block.
FIG. 11D is a diagram showing a simulation result for a fourth battery block.

### DESCRIPTION OF EMBODIMENT

Aspects of the present invention may be specified by the following configurations.

In a power supply device according to another aspect of the present disclosure referring to the aspect described above, the second spacing may be larger than the third spacing.

In a power supply device according to still another aspect of the present disclosure referring to any one of the aspects described above the first spacing may be equal to the second spacing.

In a power supply device according to still another aspect of the present disclosure referring to any one of the aspects described above, at least one of the first battery block and the fourth battery block may face an inner wall of the housing.

In a power supply device according to still another aspect of the present disclosure referring to any one of the aspects described above, a fourth spacing may be provided between the fourth battery block and an inner wall of the housing at a top of the housing. A fifth spacing may be provided between the first battery block and an inner wall of the housing at a bottom thereof.

The fourth spacing and the fifth spacing may be smaller than any one of the first spacing, the second spacing, and the third spacing.

In a power supply device according to another aspect of the present disclosure referring to any one of the aspects described above, the housing may be closed but is not - hermetically sealed.

Exemplary embodiments of the present disclosure will be described below referring to accompanying drawings. However, the exemplary embodiments described below show only examples for embodying the technical ideas of the present disclosure, and the present disclosure is not limited to the following. Further, in the present description, members shown in the scope of claims are not limited to the members of the exemplary embodiments. Especially, it is not intended that the scope of the present disclosure be limited to the sizes, materials, and shapes of components and relative arrangements between the components described in the exemplary embodiments unless otherwise specified. The sizes and the like described above are mere explanation examples. Note that the sizes and the positional relations of the members in each drawing are sometimes exaggerated for clearing the explanation. Moreover, in the following explanations, the same names and the same reference marks denote the same members or same-material members, and their detailed descriptions are appropriately omitted. Furthermore, regarding the elements constituting the present disclosure, a plurality of elements may be formed of the same member, and one member may serve as the plurality of elements. Conversely, the function of one member may be shared by the plurality of members.

The power supply device according to the present disclosure may be used in the following applications: A stationary power storage including a backup power supply for servers, and a power supply device for households, business places, and factories; an electric power source for driving power-assisted bicycles and an electric power supply for driving vehicles such as electric scooters, electric carts, hybrid vehicles, and electric vehicles; an electric power supply for portable electric apparatuses including electric cleaners and electric power tools; and any other power supply device. Hereinafter, as an exemplary embodiment of the present disclosure, a power supply device for power-assisted bicycles will be described.

### Exemplary Embodiment 1

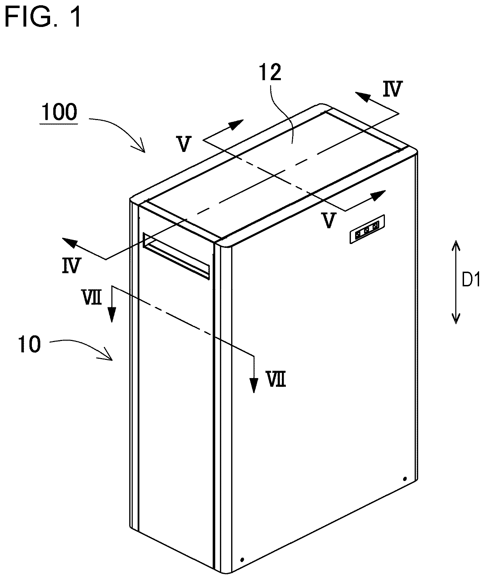

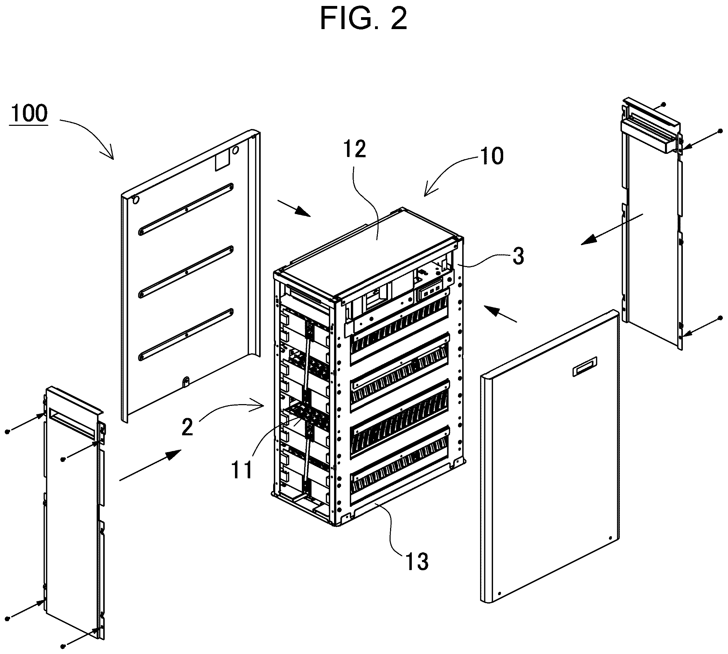

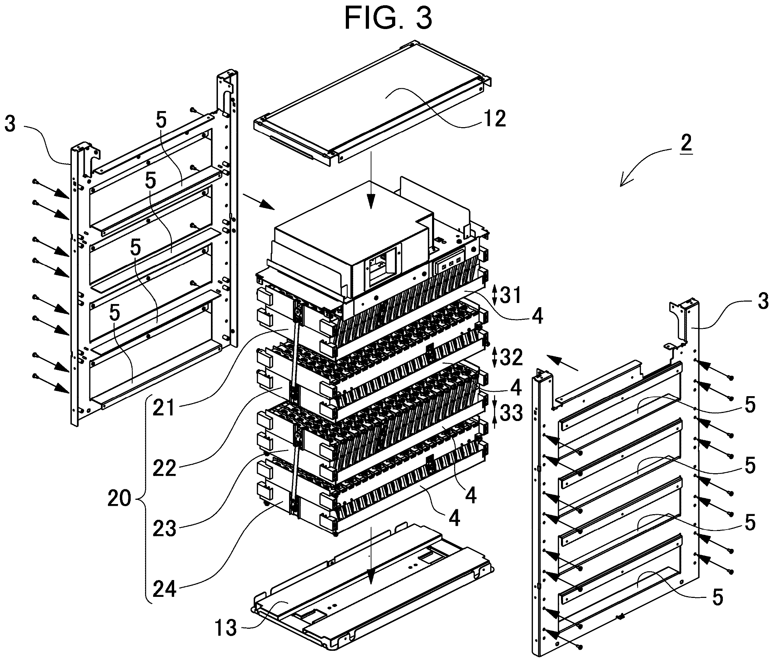

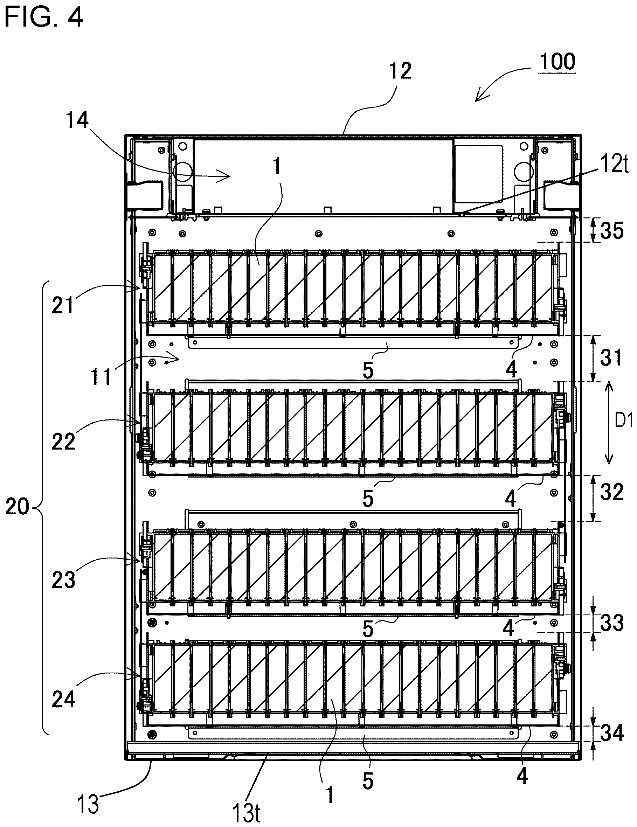

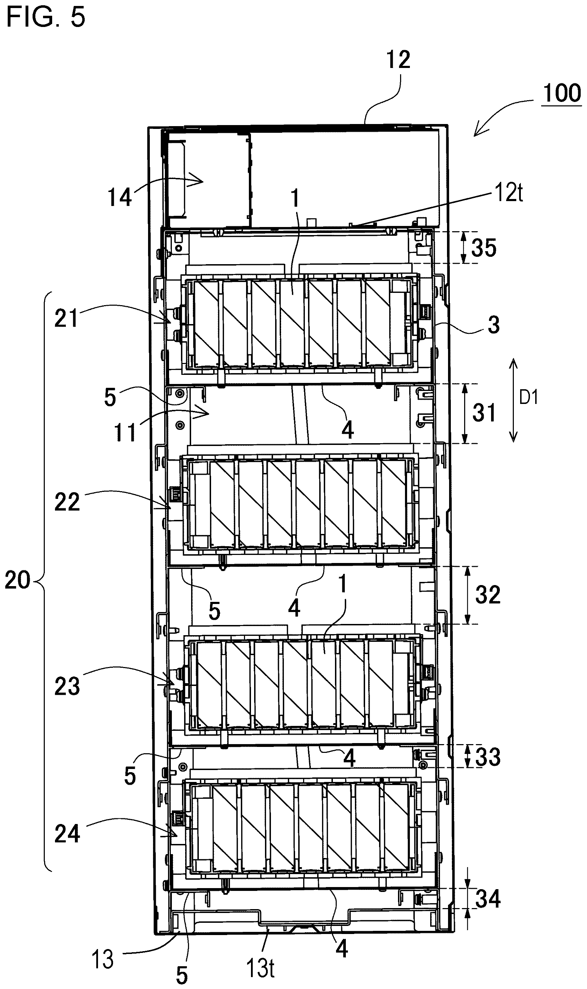

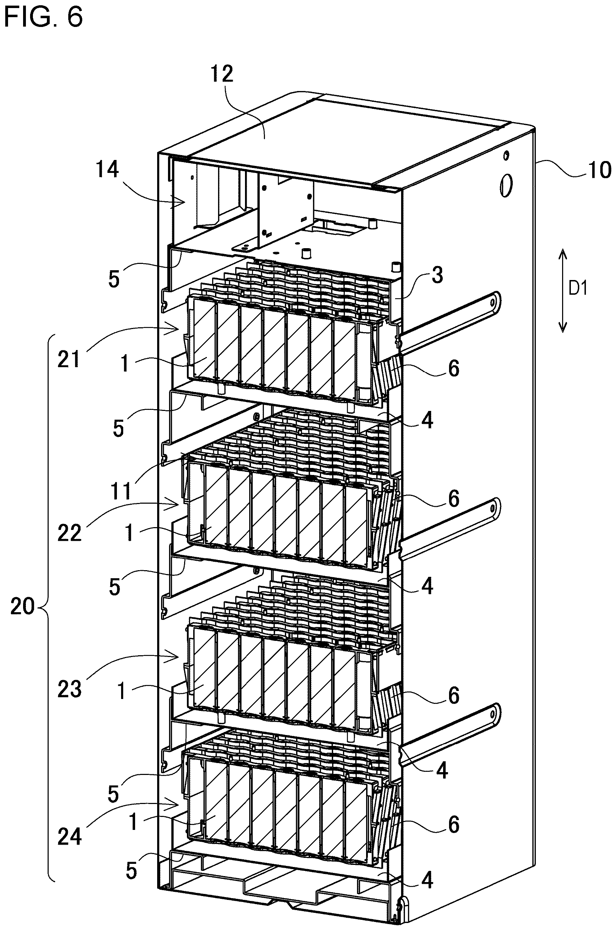

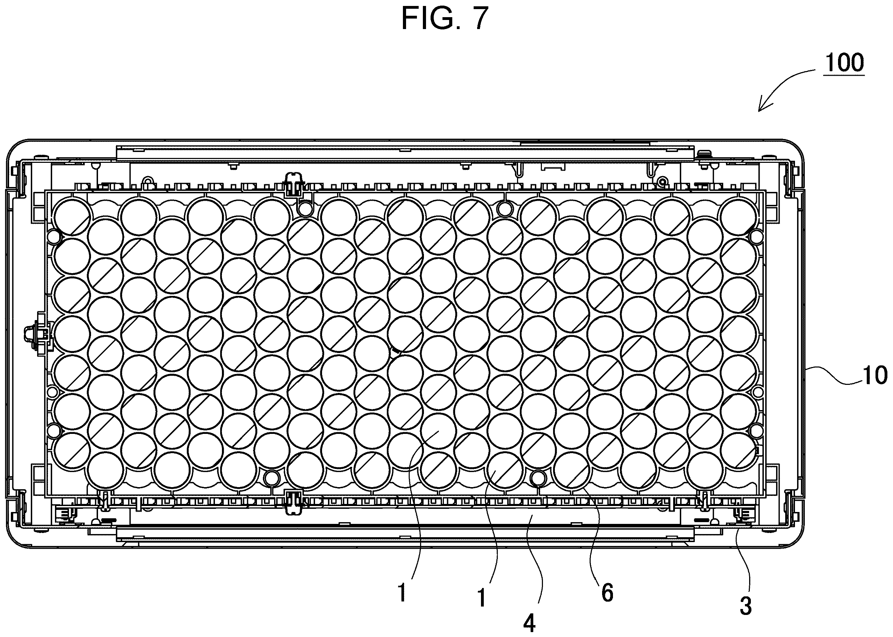

Power supply device 100 according to Exemplary Embodiment 1 of the present disclosure is shown in FIGS. 1-7. FIG. 1 is an external perspective view of power supply device 100 according to Embodiment 1 of the present disclosure. FIG. 2 is an exploded perspective view of power supply device 100 shown in FIG. 1. FIG. 3 is an exploded perspective view of block assembly 2 shown in FIG. 2. FIG. 4 is a cross-sectional view of power supply device 100 along line IV-IV shown in FIG. 1. FIG. 5 is a cross-sectional view of power supply device 100 along line V-V shown in FIG. 1. FIG. 6 is a perspective cross-sectional view of power supply device 100 along line V-V shown in FIG. 1. FIG. 7 is a cross-sectional view of power supply device 100 along line VII-VII shown in FIG. 1. Power supply device 100 shown in these figures includes housing 10 and block assembly 2.

### Housing 10

Housing 10 has a rack-type or tower-type box shape elongated in a longitudinal direction, as shown in FIGS. 1 and 2. The inside of housing 10 is a storage space accommodating block assembly 2 therein. Housing 10 is made of material, such as metal, having high strength and heat dissipation.

### Block Assembly 2

Block assembly 2 is disposed inside housing 10. Block assembly 2 includes battery blocks 20, as shown in FIGS. 3-7. Battery blocks 20 are disposed such that the battery blocks are stacked in upward and downward directions apart from one another. Each battery block 20 includes secondary battery cells 1 connected in series and parallel to one another. Each battery block 20 is placed on a corresponding one of block trays 4. Each block tray 4 is fixed to frames 3 constituting side surfaces of block assembly 2. Each of frames 3 includes fixing pieces 5 protruding into the storage space of frame 3. The fixing pieces fix block trays 4 at predetermined heights. In this example, fixing pieces 5 protrude from the left and right frames 3 so as to support both ends of a lower surface of each block tray 4. However, the structure in which battery blocks 20 are fixed inside housing 10 at predetermined heights is not limited to this configuration, and may adopt a known configuration appropriately. For example, a floor on which each of the battery blocks is placed may be formed inside the housing. Side surfaces of the battery block may be directly fixed to the frame or housing with, e.g., hooks or screws.

Each of block trays 4 includes battery holder 6 holding secondary battery cells 1, as shown in FIGS. 3 and 6-7, such that secondary battery cells 1 are accommodated inside battery holder 6. Battery holder 6 is divided into, e.g., two parts. The divided holders cover respective end edges of secondary battery cells 1. Each divided holder includes insertion tubes into which end edges of secondary battery cells 1 are inserted. The divided holders are made of insulating material, preferably made of resin. Specifically, for example, polycarbonate or ABC resin is suitably used.

### Secondary Battery Cell 1

In the example of FIGS. 6 and 7, each secondary battery cell 1 employs a cylindrical secondary battery cell having a cylindrical external shape. The cylindrical secondary battery cell includes a cylindrical outer case. An end surface of the cylindrical outer case is used as an electrode. Such a secondary battery cell 1 may preferably employ a cylindrical lithium-ion secondary battery. However, in the battery pack according to the present disclosure, the secondary battery cell is not specifically limited to the cylindrical battery and also to the lithium-ion secondary battery. The secondary battery cell may employ any type of rechargeable battery, such as a nickel-metal hydride battery or a nickel-cadmium battery.

Secondary battery cells 1 are connected in series and parallel to one another via lead plates. The shape and number of the secondary battery cells 1 are appropriately determined in accordance with specifications required for the battery pack. The battery cells may be for example, rectangular batteries, secondary battery cells called laminated cell, or pouch cell. In the example shown in FIG. 7, each battery block 20 includes cylindrical secondary battery cells 1 each having a cylindrical shape extending in an axial direction. One battery block 20 includes cylindrical secondary battery cells 1 as follows: A row is composed of 6 cylindrical secondary battery cells 1 arranged upright. The axial directions of cylindrical shape of these battery cells 1 are parallel with each other in upward and downward directions D1. One battery block includes 21 rows. Thus, one battery block 20 includes a total of 126 cylindrical secondary battery cells 1. 21 secondary battery cells 1 are connected in series to one another, and 6 groups each including 21 cells 1 are connected parallel to one another. As described later, four battery blocks 20 are connected in series to one another (84 cells are connected in series and 6 groups each including 84 cells are connected parallel to one another in the whole of the system). The block assembly is not necessarily required and, instead, battery blocks may be directly disposed inside the housing.

A circuit board is disposed in housing 10. The circuit board has a circuit mounted thereon. The circuit may be a charging-discharging circuit for controlling the charging and discharging of secondary battery cells 1 and a safety circuit for monitoring the conditions of secondary battery cells 1 and for thereby raising an alarm or halting the charging and discharging upon detecting abnormal conditions. In the example shown in FIG. 2, and 5-6, board-accommodating space 14 is provided close to top surface 12 of storage space 11 of housing 10. The circuit board is disposed in board-accommodating space 14.

Housing 10 is closed to prevent battery blocks 20 from falling outside housing 10, and is preferably not hermetically sealed. In addition, the housing may include a cooling facility therein, as needed, such as a cooling fan to forcibly cool the battery blocks. The cooling fan is disposed on the front side of the housing, for example, and blows cooling air into the spacings arranged between the battery blocks.

### Battery Blocks 21-24

In the example shown in FIGS. 5 and 6, block assembly 2 includes four battery blocks 20, i.e., first battery block 21, second battery block 22, third battery block 23, and fourth battery block 24. Battery blocks 21-24 are accommodated in housing 10 such that the battery blocks extend horizontally and stacked with spacings between adjacent battery blocks in upward and downward directions D1. Second battery block 22 is disposed below first battery block 21. Third battery block 23 is disposed below second battery block 22. Fourth battery block 24 is disposed below third battery block 23. First battery block 21 is apart from underlying second battery block 22 by first spacing 31 in between. Similarly, second battery block 22 is apart from underlying third battery block 23 by second spacing 32 in between. Third battery block 23 is apart from underlying fourth battery block 24 by third spacing 33 in between.

Each of the spacings between battery blocks 20 is a distance between adjacent battery blocks 20 as shown in FIGS. 4-6, i.e., from a side plate of battery block 20 in an upper tier to the top of rib of battery holder 6 of battery block 20 in the lower tier.

Not all the spacings between adjacent battery blocks 20 are equal to one another. First spacing 31 is larger than third spacing 33. This configuration effectively cools second battery block 22 that tends to trap heat therein because it is sandwiched between first battery block 21 and third battery block 23 inside housing 10. This configuration reduces temperature differences between the battery blocks, resulting in prolonged service lifetimes of the battery blocks.

A background of power supply device 100 according to the present embodiment will be described. A power supply device has been used in which a plurality of battery blocks is stacked in multiple tiers in a housing. Secondary battery cells constituting each of battery block generate heat due to charging and discharging. Since the degradation of the secondary battery cells due to high temperatures reduces their product service lifetimes, each secondary battery cell is subjected to heat-dissipation or cooling. On the other hand, in the power supply device including secondary battery cells, the service lifetime of the power supply device itself is governed by the most deteriorated secondary battery cell. For this reason, it is necessary to evenly dissipate the heat so that there is no variation in the heat dissipation or cooling of the secondary battery cells.

For this reason, such a power supply device has a configuration in which battery blocks are disposed apart from one another so that each battery block may be heat-dissipated. To enhance the cooling capacity, large spacings are provided between the battery blocks. However, this requires an additional space in accordance with the number of the battery blocks, accordingly increasing the size of the power supply device. Thus, in order to ensure the largest possible spacings between the battery blocks, the battery blocks have conventionally been designed to be disposed at regular intervals.

According to experiments conducted by inventors of the present disclosure, in a power supply device including battery blocks stacked in multiple tiers with the battery blocks apart from each other, the battery blocks disposed at end portions, i.e. at the uppermost and lowermost tiers, tend to be easily cooled but, the battery blocks disposed in middle tiers between the uppermost and lowermost tiers are hardly cooled, thus having high temperatures. According to experiments, a battery block out of the battery blocks disposed in the middle tiers which is disposed on the upper side has higher temperature than the other battery blocks. This is presumably because that thermal convection causes the heat to move upward, thereby causing the battery block in the upper tier to have higher temperature.

In view of such circumferences, the inventors of the present disclosure has developed a configuration providing even dissipation while avoiding increasing the size of the housing itself of a power supply device. Then, the inventor has found that making not uniform but larger the spacing apart between battery blocks in the upper tiers reduces the temperature differences between the battery blocks, which leads to the present invention. What the inventor has found is as follows: In power supply device 100 including first battery block 21, second battery block 22, third battery block 23, and fourth battery block 24 stacked in this order from above, the temperature differences between the battery blocks are reduced by making larger first spacing 31 between first battery block 21 and second battery block 22 than third spacing 33 between third battery block 23 and fourth battery block 24.

Furthermore, second spacing 32 may be preferably larger than third spacing 33. Furthermore, first spacing 31 may be equal to second spacing 32.

At least either first battery block 21 or fourth battery block 24 is preferably disposed at a position facing an inner wall of housing 10. In the example shown in FIGS. 4, 5, and 6, first battery block 21 faces inner wall 12t on the top surface 12 side of housing 10, and fourth battery block 24 faces inner wall 12t on the bottom surface 13 side of housing 10. In this example, the following spacings are disposed: fourth spacing 34 between fourth battery block 24 and the inner wall on the top surface 12 side of housing 10, and fifth spacing 35 between first battery block 21 and the inner wall on the bottom surface 13 side of housing 10. Fourth spacing 34 and fifth spacing 35 may be preferably smaller than any one of first spacing 31, second spacing 32, and third spacing 33.

### Example, Comparative Example

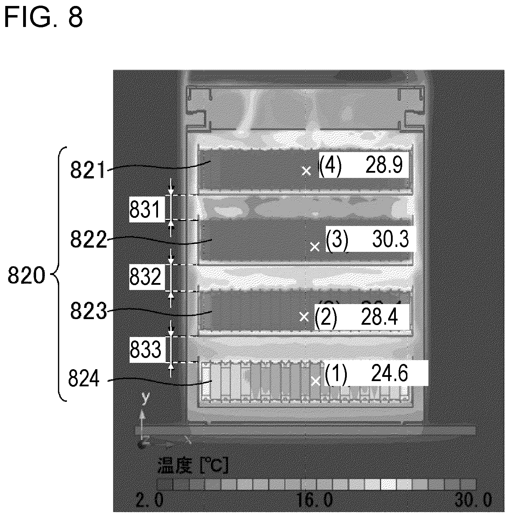

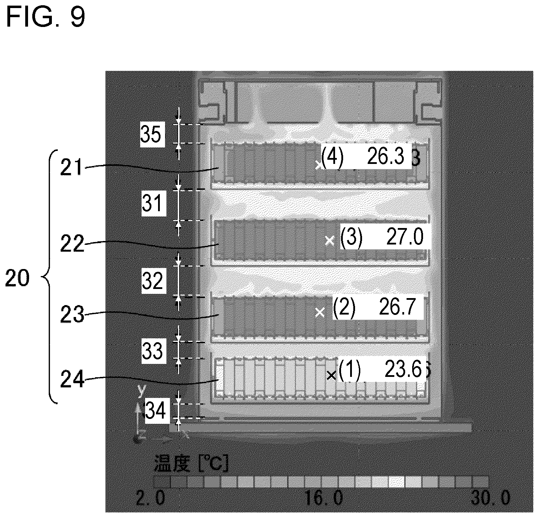

Effects of a power supply device according to the present embodiment have been confirmed by simulation, and the results are shown in FIGS. 8 and 9. FIG. 8 is an image diagram showing the simulation result for power supply device 800 of a Comparative Example from the same viewpoint as used in FIG. 4. FIG. 9 is an image diagram showing the simulation result for the power supply device of an Example, from the same viewpoint as used in FIG. 4. Throughout the figures, the temperatures at locations denoted by marks "×" are indicated by numerical values. In this case, the temperatures of secondary battery cells were measured, each cell of which was located at the middle of a corresponding one of the battery blocks. Here, metal housing 10 was used for both the Example and the Comparative Example, with the housing measuring 480 mm in length, 245 mm in width, and 660 mm in height. In the Comparative Example, as shown in FIG. 8, spacings 831, 832, and 833 between battery blocks 820 were all equal to 46.75 mm. On the other hand, in the Example, as shown in FIG. 9, first spacing 31 was 56.75 mm, second spacing 32 was 56.75 mm, and third spacing 33 was 26.75 mm. That is, first spacing 31 and second spacing 32 were wider than the Comparative Example by 10 mm while third spacing 33 was narrower than the Comparative Example by 20 mm. Under this condition, temperature variations were determined by simulation in the case of all cells being assumed as heat sources of a constant wattage W. The results from the simulation are as follows: In the Comparative Example, first battery block 821 was at 28.9°C, second battery block 822 was at 30.3°C, third battery block 823 was at 28.4°C, and fourth battery block 824 was at 24.6°C. These values were then as follows: The average value was 26.43°C, the maximum value was 30.4°C, the minimum value was 21.7°C, the temperature difference Δt(MAX-MIN) between the maximum and minimum values was 8.7°C, and the standard deviation was 2.256.

In contrast, in the power supply device of the Example, first battery block 21 was at 26.3°C, second battery block 22 was at 27.0°C, third battery block 23 was at 26.7°C, and fourth battery block 24 was at 23.6°C. These values were then as follows: The average value was 25.017°C, the maximum value was 27.1°C, the minimum value was 22.2°C, the temperature difference Δt(MAX-MIN) between the maximum and minimum values was 4.9°C, and the standard deviation was 1.431. As described above, the average temperature is reduced by 1.4°C. The maximum temperature is reduced by 3.3°C while the minimum temperature increases by 0.5°C, resulting in a decrease in the temperature difference. The temperature difference Δt is reduced by 56% from 8.7°C to 4.9°C. The temperature difference between the secondary battery cells thus have been successfully reduced only by adjusting the spacings between the battery blocks without changing the dimensions of the housing.

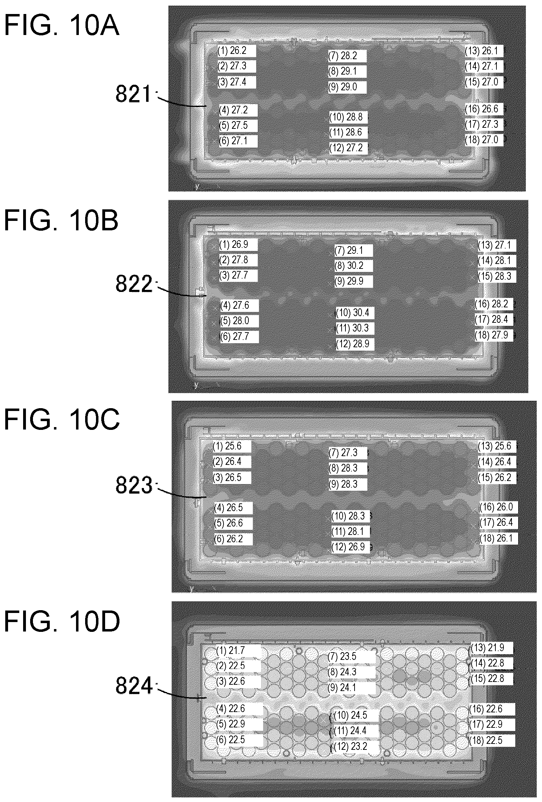

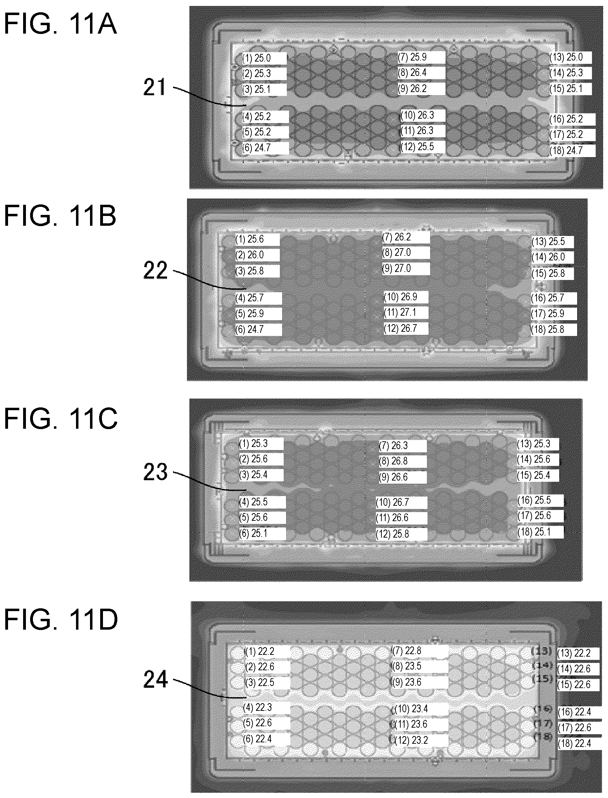

In the above, the simulation has verified the effect of reducing the temperature differences in the height direction of the power supply device. Next, the simulation has also verified the effect of reducing temperature differences in the horizontal direction of the power supply device. The results from the simulation are shown in FIGS. 10A to 10D, and 11A to 11D. FIG. 10A is a diagram showing the simulation result for first battery block 821 of power supply device 800 of the Comparative Example from the same viewpoint as used in FIG. 7. FIG. 10B is a diagram showing the simulation result for second battery block 822. FIG. 10C is a diagram showing the simulation result for third battery block 823. FIG. 10D is a diagram showing the simulation result for fourth battery block 824. FIG. 11A is a diagram showing the simulation result for first battery block 21 of the power supply device of the Example, from the same viewpoint as used in FIG. 7. FIG. 11B is a diagram showing the simulation result for second battery block 22. FIG. 11C is a diagram showing the simulation result for third battery block 23. FIG. 11D is a diagram showing the simulation result for fourth battery block 24. Throughout the figures, in the cross-sectional view of the battery block shown in FIG. 7, the following temperatures at a total of eighteen sites were computed by simulation. The simulated temperatures are the temperatures of six secondary battery cells disposed on the left side of the view, the temperatures of six secondary battery cells disposed on the right side, and the temperatures of six secondary battery cells disposed at the middle between both sides. The temperatures of these cells are noted in each figure. In any of the figures, it was observed that the temperatures of the secondary battery cells disposed at the peripheral positions were relatively low, while the temperatures of the secondary battery cells disposed at the middle positions were relatively high. As for power supply device 800 of the Comparative Example, as shown in FIGS. 10A-10D, it was confirmed that the temperatures became higher at first battery block 821, second battery block 822, and third battery block 823. On the other hand, in fourth battery block 824, it was confirmed that the secondary batter cells at the middle positions had higher temperatures but the secondary batter cells at the peripheral portions had lower temperatures, resulting in an increase in the temperature differences between the cells.

In contrast, in the power supply device of the Example, it was observed that, as shown in FIGS. 11A-11D, the temperature differences between the cells in the same battery block were smaller than those of the Comparative Example. In particular, the effect has been confirmed in second battery block 22, which showed the highest temperature of all, as follows: The Comparative Example showed that, as shown in FIG. 10B, the secondary battery cell at position (10) in the middle was at the highest temperature of 30.4°C, the cell at position (1) was at the lowest temperature of 26.9°C, and thus the temperature difference between them was 3.5°C. In contrast, the Example showed that the secondary battery cell at position (11) was at the highest temperature of 27.1°C, the cells at positions (1) and (7) were at the lowest temperature of 25.6°C, and thus the temperature difference between them was 1.5°C, which results in a decrease in the temperature difference to 42.86%. According to the power supply device of the Example, it has been confirmed that the temperature differences between the secondary battery cells are reduced not only in the vertical direction but also in the horizontal direction.

In the embodiments, terms indicating directions such as "below" and "upward and downward" do not indicate absolute directions, such as a vertical direction, but indicate relative directions determined only by the relative positional relationships of components, such as the battery blocks, of the power supply device.

### INDUSTRIAL APPLICABILITY

A power supply device according to the present disclosure is preferably useable as a power storage appliance for use in homes, commercial facilities, and factories, and as a power supply appliance for use in mobile bodies such as power-assisted bicycles and electric carts.

### REFERENCE MARKS IN THE DRAWINGS

- 100: power supply device
- 1: secondary battery cell
- 2: block assembly
- 3: frame
- 4: block tray
- 5: fixing piece
- 6: battery holder
- 10: housing
- 11: storage space
- 12: top surface
- 13: bottom surface
- 14: board-accommodating space
- 20: battery block
- 21: first battery block
- 22: second battery block
- 23: third battery block
- 24: fourth battery block
- 31: first spacing
- 32: second spacing
- 33: third spacing
- 34: fourth spacing
- 35: fifth spacing
- 800: power supply device
- 820: battery block
- 821: first battery block
- 822: second battery block
- 823: third battery block
- 831, 832, 833: spacing between battery blocks

## Claims

1. A power supply device comprising:
a first battery block including a plurality of secondary battery cells accommodated in the first battery block;
a second battery block including a plurality of secondary battery cells accommodated in the second battery block, the second battery being disposed below the first battery block apart from the first battery block by a first spacing;
a third battery block including a plurality of secondary battery cells accommodated in the third battery block, the third battery block being disposed below the second battery block and apart from the second battery block by a second spacing;
a fourth battery block including a plurality of secondary battery cells accommodated in the fourth battery block, the fourth battery block being disposed below the third battery block and apart from the third battery block by a third spacing; and
a housing accommodating the first battery block, the second battery block, the third battery block, and the fourth battery block therein such that the first battery block, the second battery block, the third battery block, and the fourth battery block are arranged in upward and downward directions,
wherein the first spacing is larger than the third spacing.

2. The power supply device according to claim 1, wherein the second spacing is larger than the third spacing.

3. The power supply device according to claim 1 or 2, wherein the first spacing is equal to the second spacing.

4. The power supply device according to any one of claims 1 to 3, wherein at least one of the first battery block and the fourth battery block faces an inner wall of the housing provided.

5. The power supply device according to claim 4,
wherein the fourth battery block faces an inner wall of the housing provided at a top of the housing and apart from the inner wall of the housing at the top by a fourth spacing,
wherein the first battery block faces an inner wall of the housing provided at a bottom of the housing and is apart from the inner wall of the housing provide at the bottom by a fifth spacing, and
wherein each of the fourth spacing and the fifth spacing is smaller than any one of the first spacing, the second spacing, and the third spacing.

6. The power supply device according to any one of claims 1 to 5, wherein the housing is closed but is not hermetically sealed.
